# NEUE EUROPÄISCHE PATENTSCHRIFT

(11) **EP 1 865 045 B2**
(45) Veröffentlichungstag und Bekanntmachung des Hinweises auf die Entscheidung über den Einspruch: **09.12.2015**
(45) Hinweis auf die Patenterteilung: 28.03.2012
(21) Anmeldenummer: 06011709.0
(22) Anmeldetag: 07.06.2006
(51) Int. Cl.: C10J 3/00, C10J 3/10, C10K 3/00

(54) **VERFAHREN ZUR DAMPFREFORMIERUNG VON BIOMASSE**
PROCESS FOR STEAMREFORMING OF BIOMASS
PROCÉDÉ POUR LA REFORMAGE À LA VAPEUR DU BIOMASSE

(43) Veröffentlichungstag der Anmeldung: 12.12.2007
(73) Patentinhaber: ILW - Ingeneurbüro, 87647 Oberthingau (DE)
(72) Erfinder: Finger, Ulrich, 87647 Oberthingau (DE)
(74) Vertreter: Beier, Ralph

(56) Entgegenhaltungen:
- EP-A- 1 323 810
- EP-A- 1 447 438
- EP-A1- 0 603 446
- WO-A2-2004/024620
- WO-A2-2004/074181
- WO-A2-2005/047435
- DE-A1- 2 212 880
- US-A- 1 197 456
- US-A- 4 881 947
- US-A- 5 151 159

## Beschreibung

Die Erfindung betrifft ein von außen beheiztes Dampfreformationsverfahren in dem kleine, feuchte und kohlenstoffhaltige Biomasse mechanisch bewegt und vergast werden kann.

Aus der EP 1 323 810 A1 ist beispielsweise ein Doppelrohrvergaser bekannt, der Biomasse in einem Pyrolyseverfahren in ein Schwachgas umzusetzen vermag.

Aus der EP 1 447 438 A1 ist ein weiteres derartiges Verfahren bekannt.

Beide Dokumente zum Stand der Technik verwenden ein autothermes Verfahren, bei dem die Prozesswärme durch innere Verbrennung im Vergaser erzeugt wird. Für diese innere Verbrennung wird Verbrennungsluft benötigt, die jedoch einen großen Anteil Stickstoff enthält.

Somit kann damit nur ein Schwachgas mit geringem Heizwert erzeugt werden.

Aufgabe der Erfindung ist es, ein Verfahren vorzuschlagen, welche die Erzeugung eines hochwertigen Gases mit hohem Heizwert ermöglicht.

Diese Aufgabe wird durch Anspruch 1 gelöst.

Dies wird durch eine neuartige Vergasung von kohlenstoffhaltiger Biomasse, bei der die Prozesswärme von außen zugeführt wird, erreicht.

Es handelt sich um ein Dampfreformationsverfahren bei dem Wasserdampf von der Biomassetrocknung für die Dampfreformierung verwendet wird. Dadurch ist es möglich aus kohlenstoffhaltiger Biomasse ein hochwertiges Synthesegas für regenerative Energie zu erzeugen.

Da in dem Reaktor keine innere Verbrennung für die Erzeugung der Prozesswärme stattfindet, und auch keine Verbrennungsluft eingeblasen wird, gelangt auch kein Stickstoff in den Vergasungsprozess.

In der Verbrennungsluft sind 78,1 % Stickstoff enthalten und werden sonst als Ballast dem Synthesegas beigemischt, wodurch das Gas zum Schwachgas wird.

Umfangreiche Messungen mit einem Gaschromatographen haben gezeigt, dass mit diesem Verfahren ein energiereiches, teerfreies Synthesegas hergestellt werden kann.

Die Mittelwerte dieser Messungen lauten: H₂ = 46,3 Vol. %; CO = 21,7 Vol.%; CH₄ = 14,2 Vol.% und CO₂ = 16,5 Vol.% der Rest ist Stickstoff N2.

Der erreichte Heizwert hat eine Wobbezahl von 3,1 bis 3,3 kW/m³.

Bei dem Dampfreformator handelt es sich um einen Doppelspiralen Umlaufreaktor, bei dem das zu vergasende Material an dem einen Endpunkt 1 aufgegeben wird und das Restmaterial am zweiten Endpunkt 2 über eine spezielle Zellenradschleuse 3 in den unteren Teil des Reaktors transportiert wird. Ein Dosiersieb 4 über der Zellenradschleuse lasst nur die entstandene Asche und das kleine, nicht ganz entgaste Biomassegranulat in die Schleuse und damit in den unteren Teil des Reaktors fallen.

Das größere Material wird mit geeigneten Paddeln 5, die an beiden Enden der Transportspiralen 6 angebaut sind, zum Endpunkt 1 zurückgeführt und mit dem neu eingetragenen Material wieder in den Umlauf gebracht. Besonders große Materialteile werden solange im Umlauf transportiert, bis sie durch Entgasung die Stückgröße erreicht haben, dass sie durch das Dosiersieb 4 fallen und im unteren Teil des Reaktors mit Luftüberschuss verbrannt werden.

Im unteren Teil des Reaktors findet die Verbrennung des Restkohlenstoffes aus der Asche und dem Biomassegranulat statt, um die im oberen Teil des Reaktors befindlichen Rohre 7 von außen zu erhitzen. Die vorgewärmte Verbrennungsluft wird über eine Hohlschnecke 8 dem Verbrennungsteil mittels eines Gebläses 9 zugeführt. Die entstehenden Rauchgase aus der Verbrennung entweichen aus dem Reaktor und werden für die Vorwärmung der Verbrennungsluft mittels eines Wärmetauschers 10 verwendet.

Die Hohlschnecke 8 transportiert die Asche und das Verbrennungsmaterial zum Austrag 11. Von dort aus wird die Asche ausgesiebt und über eine Transporteinrichtung zu den Aschebehältern transportiert. Die noch vorhandenen Koksbestandteile gelangen in den Koksbehälter 12 und werden für die Gasreinigung verwendet.

Das erzeugte Synthesegas entweicht am Endpunkt 1 aus dem Reaktor und strömt durch die Materialschnecken 13 und den Materialbehälter 14 in den Koksbehälter 12. Auf diesem Weg wird das Synthesegas abgekühlt und das Biomassematerial erwärmt. Dabei erreicht das Synthesegas den Sättigungspunkt und scheidet Kondensate und langkettige Kohlenwasserstoffe aus die von dem erwärmten Material aufgenommen und dem Reaktor mit der Materialschnecke 13 wieder zugeführt werden.

Im oberen Bereich des Koksbehälters 12 befinden sich auswechselbare Filter die den Kohlenstaub und sonstige Verunreinigungen zurückhalten. Das abgekühlte und gereinigte Synthesegas wird mit einem Saugzuggebläse hinter den Filtern an mehreren Öffnungen abgesaugt und einer Verbrennungskraftmaschine oder einer Verbrennung zugeführt. Ein Unterdrucksensor überwacht den Unterdruck im Reaktor und steuert über einen Frequenzumrichter die Drehzahl des Saugzuggebläses. Die Temperaturüberwachung im Verbrennungsteil übernimmt ein Thermoelement das über einen Regler die Drehzahl der Zellenradschleuse steuert. Bei einer höheren Drehzahl der Schleuse wird entsprechend mehr Material der Verbrennung zugeführt und führt zu einer höheren Verbrennungstemperatur.

Für die Inbetriebnahme des Dampfreformators ist zwischen Gebläse 9 und dem Wärmetauscher 10 ein elektrisch beheizter Erhitzer installiert, der beim Start die Verbrennungsluft erhitzt und das im Verbrennungsteil des Reaktors befindende Restmaterial entzündet. Sobald die erforderliche Prozesstemperatur erreicht ist und die Verbrennungsluft durch den Wärmetauscher 10 vorgewärmt wird, kann der Erhitzer abgeschaltet werden. Bei der Vergasung von Biomasse die durch die Verbrennung des Restmaterials nicht genügend Prozesswärme erzeugt kann der Erhitzer zugeschaltet werden.

Bei dem gesamten Vergasungsprozess im Dampfreformator entstehen außer der ausgesiebten Asche keinerlei Reststoffe. Die ausgesiebte Asche besteht größtenteils aus Mineralstoffen und kann als Mineraldünger verwendet werden.

Der Reaktor ist liegend gebaut und hat eine gesamte Länge von sieben Metern bei einer Höhe von zwei Metern.

Dadurch ist es möglich die gesamte Vergasungsanlage in einen großen Container einzubauen.

Dies ergibt wesentliche Vorteile bei der Montage der Anlage und beim EXPORT.

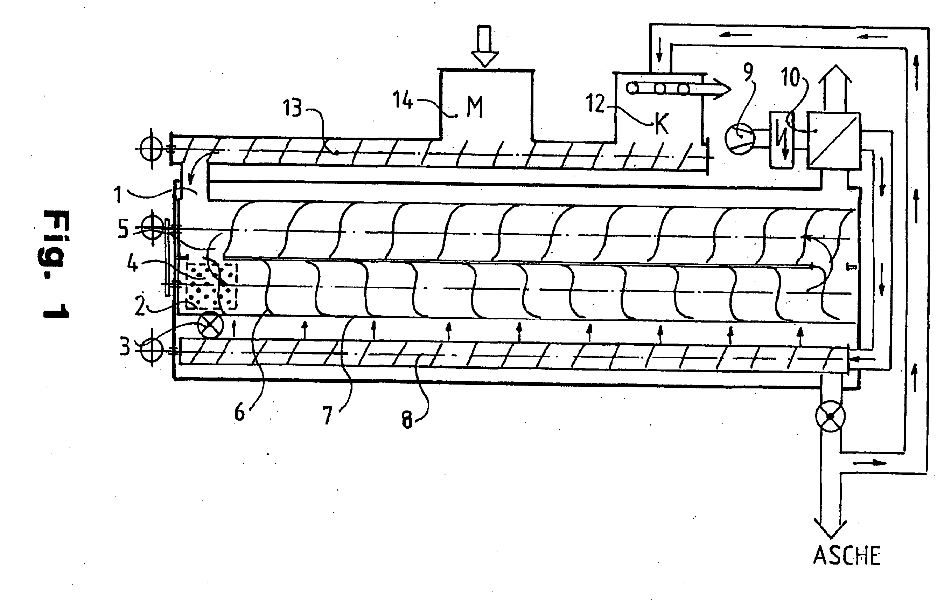

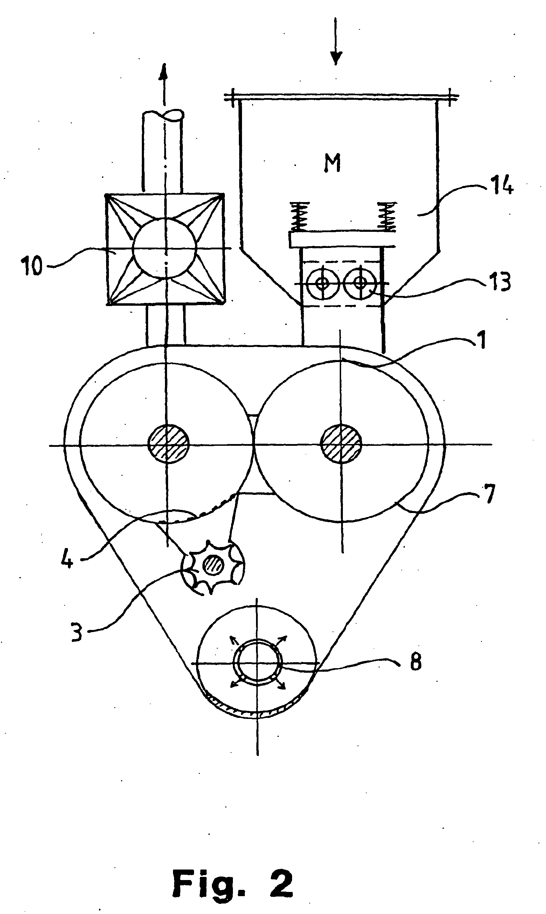

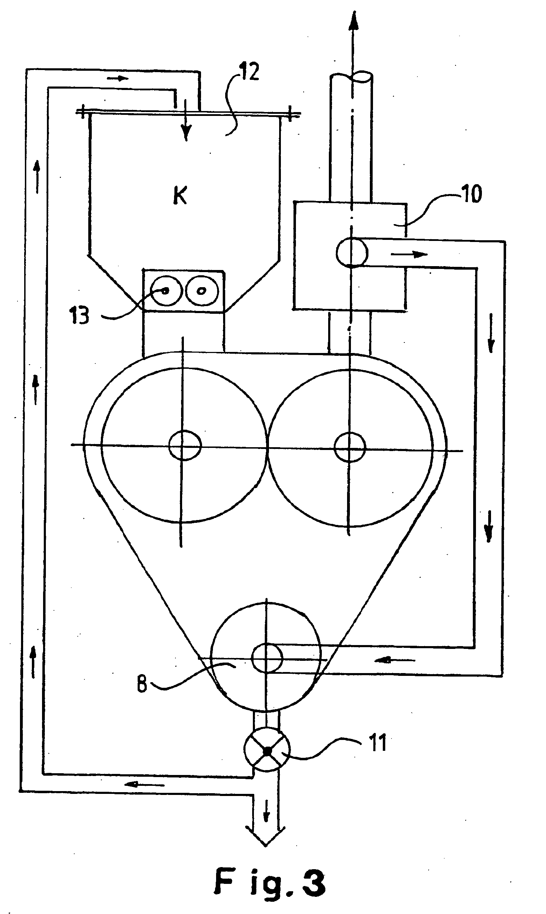

## Patentansprüche

1. Ein von außen beheiztes Dampfreformationsverfahren in dem kleine, feuchte und kohlenstoffhaltige Biomasse mechanisch bewegt und vergast werden kann, **dadurch gekennzeichnet, dass** die Prozesswärme von außen einem Reaktor (7) eines Dampfreformators zugeführt wird, damit ein kontinuierlicher Vergasungsprozess im Reaktor (7) erreicht wird und keine Verbrennungsluft mit hohen Stickstoffgehalt in die Reaktorrohre (7) eingeblasen wird und dass am Ende eines Reaktorrohres (7) ein Dosiersieb (4) mit darunterliegender Zellenradschleuse (3) angeordnet ist, um die entstandene Asche und ein Granulat aus nicht entgaster Biomasse in einen darunterliegenden Verbrennungsraum zu transportieren.

2. Dampfreformationsverfahren nach Anspruch 1, **dadurch gekennzeichnet, dass** der Wasserdampf, der bei der Trocknung der Biomasse entsteht, zur Reformierung im Reaktor (7) benutzt wird und dadurch ein hochwertiges, teerfreies Synthesegas mit einem geringen Stickstoffgehalt entsteht.

3. Dampfreformationsverfahren nach Anspruch 1 oder 2, **dadurch gekennzeichnet, dass** die Biomasse im Reaktor mit zwei nebeneinanderliegenden und gegenläufigen Spiralen (6), die von außen beheizt werden, im Umlauf transportiert wird um dadurch eine kontinuierliche Vergesung zu erreichen.

4. Dampfreformationsverfahren nach Anspruch 1, 2 oder 3, **dadurch gekennzeichnet, dass** sich im unteren Verbrennungsraum eine Hohlschnecke (8) mit Luftdüsen befindet, durch die erwärmte Verbrennungslufs eingeblasen wird und mit dieser Anordnung keine weitere Energie für die Prozesswärme erforderlich ist.

5. Dampfreformationsverfahren nach Anspruch 1, 2, 3 oder 4, **dadurch gekennzeichnet, dass** die von außen angetriebene Hohlschnecke (8) das Verbrennungsmaterial zum Austrag transportiert, wo die Asche vom Restmaterial getrennt wird und der Koks dem Koksbehälter (12) zugeführt wird.

6. Dampfreformationsverfahren nach Anspruch 1, 2, 3, 4 oder 5, **dadurch gekennzeichnet, dass** Abgase aus der Verbrennung mit einem Wärmetauscher (10) die Verbrennungsluft vorwärmen und dass ein Heissgasgebläse (9) zugeschaltet werden kann.

7. Dampfreformationsverfahren nach Anspruch 1, 2, 3, 4, 5 oder 6, **dadurch gekennzeichnet, dass** das erzeugte Synthesegas durch die Materialschnecken (13) in den Koksbehälter (12) strömt und auf diesem Weg abgekühlt und gereinigt wird.

8. Dampfreformationsverfahren nach Anspruch 1, 2, 3, 4, 5, 6 oder 7, **dadurch gekennzeichnet, dass** durch den mechanischen Transport der gesamten Biomasse es möglich ist, auch feinkörniges und feuchtes Material zu vergasen und ebenfalls kein Hohlbrand oder ein Materialstau entstehen kann.

9. Dampfreformationsverfahren nach Anspruch 1, 2, 3, 4, 5, 6, 7 oder 8, **dadurch gekennzeichnet, dass** durch die flache und lange Bauweise des Reaktors (7) es möglich ist, die gesamte Anlage in einen handelsüblichen Container einzubauen.

## Claims

1. An externally heated steam reformation method in which small moist biomass with carbon content can be mechanically moved and gasified, **characterised in that** the process heat is fed from outside to a reactor (7) of a steam reformer so that a continuous gasification process is achieved in the reactor (7) and no combustion air with high nitrogen content is blown into the reactor pipe (7) and arranged at the end of a reactor pipe (7) is a metering filter (4) with cellular wheel sluice (3) thereunder in order to transport the ash which has arisen and a granulate from non-degasified biomass into a combustion chamber disposed thereunder.

2. Steam reformation method according to claim 1, **characterised in that** the water steam which arises during drying of the biomass is used for reformation in the reactor (7) and thereby a high-quality tar-free synthesis gas with low nitrogen content arises.

3. Steam reformation method according to claim 1 or 2, **characterised in that** the biomass is transported in the reactor (7) in circulation by two mutually adjacent and externally heated helices (6) of opposite sense in order to thereby achieve a continuous gasification.

4. Steam reformation method according to claim 1, 2 or 3, **characterised in that** disposed in the lower combustion chamber is a hollow worm (8) with air nozzles through which heated combustion air is blown in and with this arrangement no further energy for the process heat is required.

5. Steam reformation method according to claim 1, 2, 3 or 4, **characterised in that** the externally driven hollow worm (8) transports the combustion material to the discharge where the ash is separated from the remaining material and the coke is fed to the coke container (12).

6. Steam reformation method according to claim 1, 2, 3, 4 or 5, **characterised in that** waste gases from the combustion preheat the combustion air by a heat exchanger (10) and that a hot-gas blower (9) can be switched in.

7. Steam reformation method according to claim 1, 2, 3, 4, 5 or 6, **characterised in that** the synthesis gas produced flows by the material worms (13) into the coke container (12) and is in this way cooled down and cleaned.

8. Steam reformation method according to claim 1, 2, 3, 4, 5, 6 or 7, **characterised in that** through the mechanical transport of the entire biomass it is possible to gasify even fine-grained and moist material and equally a cavity fire or build up of material cannot occur.

9. Steam reformation method according to claim 1, 2, 3, 4, 5, 6, 7 or 8, **characterised in that** through the flat and lengthy mode of construction of the reactor (7) it is possible to install the entire plant in a standard container.

## Revendications

1. Procédé de reformage à la vapeur avec chauffage externe, selon lequel une biomasse de petite taille, humide et contenant du carbone, peut être déplacée mécaniquement et gazéifiée, **caractérisé en ce que** la chaleur de processus est apportée de l'extérieur à un réacteur (7) d'un reformeur à vapeur, de sorte qu'on obtient un processus de gazéification continu dans le réacteur (7) et qu'il n'y pas d'insufflation dans les tubes du réacteur (7) d'air de combustion ayant une teneur élevée en azote, et **en ce qu'**un crible doseur (4), en dessous duquel se trouve un sas à roue cellulaire (3), est disposé à l'extrémité d'un tube du réacteur (7) afin de transporter dans une chambre de combustion sous-jacente les cendres produites et un granulat de biomasse non gazéifiée.

2. Procédé de reformage à la vapeur selon la revendication 1, **caractérisé en ce que** la vapeur d'eau qui est produite lors du séchage de la biomasse est utilisée pour le reformage dans le réacteur (7), de sorte qu'on obtient un gaz de synthèse de haute qualité, sans goudron et ayant une faible teneur en azote.

3. Procédé de reformage à la vapeur selon la revendication 1 ou 2, **caractérisé en ce que** la biomasse est transportée en circulation dans le réacteur (7) par deux spirales (6) juxtaposées et contrarotatives qui sont chauffées de l'extérieur, afin d'obtenir ainsi une gazéification continue.

4. Procédé de reformage à la vapeur selon la revendication 1, 2 ou 3, **caractérisé en ce q**u'une vis sans fin creuse (8) dotée de buses d'air, à travers laquelle est insufflé de l'air de combustion réchauffé, se trouve dans la chambre de combustion inférieure, et avec cet agencement, on n'a pas besoin d'autre énergie pour la chaleur de processus.

5. Procédé de reformage à la vapeur selon la revendication 1, 2, 3 ou 4, **caractérisé en ce que** la vis sans fin creuse (8), entraînée de l'extérieur, transporte le matériau de combustion vers l'évacuation, où les cendres sont séparées du matériau résiduel et le coke est apporté au récipient de coke (12).

6. Procédé de reformage à la vapeur selon la revendication 1, 2, 3, 4 ou 5, **caractérisé en ce que** les fumées issues de la combustion préchauffent au moyen d'un échangeur de chaleur (10) l'air de combustion, et **en ce qu'**une soufflante de gaz chaud (9) peut être activée.

7. Procédé de reformage à la vapeur selon la revendication 1, 2, 3, 4, 5 ou 6, **caractérisé en ce que** le gaz de synthèse produit s'écoule à travers la vis de transport de matériau (13) dans le récipient de coke (12) et est refroidi et épuré sur ce parcours.

8. Procédé de reformage à la vapeur selon la revendication 1, 2, 3, 4, 5, 6 ou 7, **caractérisé en ce que** le transport mécanique de l'ensemble de la biomasse permet de gazéifier également un matériau à grains fins et humide, et il ne peut également pas y avoir de combustion incomplète ou d'accumulation de matériau.

9. Procédé de reformage à la vapeur selon la revendication 1, 2, 3, 4, 5, 6, 7 ou 8, **caractérisé en ce que** la forme de construction plate et oblongue du réacteur (7) permet de loger l'ensemble de l'installation dans un conteneur de type courant.
